# EUROPEAN PATENT APPLICATION

(11) **EP 1 491 512 A1**
(43) Date of publication of application: **29.12.2004**
(21) Application number: 02807062.1
(22) Date of filing: 27.12.2002
(51) Int. Cl.: C03B 37/04

(54) **METHOD AND DEVICE FOR PRODUCING GLASS FIBER**

(30) Priority: 15.03.2002 JP 2002072396
(71) Applicant: Paramount Glass Manufacturing Co., Ltd., Koriyama-shim, Fukushima 963-8017 (JP)
(72) Inventor: OTAKI, Keiji, c/o Paramount Glass Mfg. Co. Ltd., Koriyama-shi, Fukushima 963-8017 (JP); YODA, Mitsuji, c/o Paramount Glass Mfg. Co. Ltd., Koriyama-shi, Fukushima 963-8017 (JP); HARADA, Yoshiyuki, c/o Paramount Glass Mfg Co. Ltd, Koriyama-shi, Fukushima 963-8017 (JP); BAN, Yuichi, c/o Paramount Glass Mfg. Co. Ltd., Koriyama-shi, Fukushima 963-8017 (JP)
(74) Representative: Crouch, David John
(86) International application number: PCT/JP2002/013790
(87) International publication number: WO 2003/078340

(57) **Abstract**

It is therefore an object of the present invention to provide a method and an apparatus for continuously producing high quality glass fiber that shows excellent characteristics required to various glass fiber products in terms of fiber length, fiber quality and fiber distribution and, at the same time, that allows to prolong the service life of the rotating body, that improve the productivity, and that suppress any increase in the producing cost. An axial and/or circumferential rows of orificeless sections (3B, 3C) are provided in a peripheral wall (2) of a hollow rotating body (1). Also, a gas flow (Z) is provided around a flame flow (G), and a compressed gas flow (S) are also provided.

## Description

### FIELD OF THE INVENTION

This invention relates to an improvement on a method and an apparatus for producing glass fiber by means of a centrifugal process.

### RELATED BACKGROUND ART

U.S. Patent No. 4,689,061 and Japanese Patent Laid-Open No. 5-213625 disclose a method and apparatus for producing glass fiber by means of a centrifugal process. According to U.S. Patent No. 4,689,061, a hollow cylindrical rotating body is provided circumferentially at the peripheral wall thereof with a plurality of orificeless sections arranged in a vertical direction, to prevent the fibers ejected from the orifices from interfering with each other in order to raise the tensile strength of fiber.

Japanese Patent Laid-Open No. 5-213625 discloses a method and an apparatus for forming fiber from glass or some other thermoplastic material by internal centrifugal radiation that accompanies hot air drawing, characterized by forming independent cold branch jet streams that merge at a position beyond the lowermost row of orifices on the peripheral surface of a centrifuge by means of an improved blast ring, thereby forming a gas layer above the peripheral surface. The above cited invention provides a fiber that is more homogeneous and has better mechanical properties than known fibers.

With the method disclosed in U.S. Patent No. 4,689,061, orificeless sections are provided partially in order to prevent fibers from interfering with each other. In other words, the U.S. Patent does not disclose a method of prolonging the service life of the rotating body. Additionally, the rotating body is provided at the peripheral wall thereof with a row of orificeless sections in order to prevent entanglement of fibers (and tufts). However, the spring effect and the restored rate against compression of fiber can be improved when fibers are entangled to a small extent in the case of products showing a high restored rate such as low density glass wool products. Still additionally, with the method disclosed in the above cited patent document, orificeless sections are arranged only circumferentially and, in view of the use of a rotating body, fibers may be rather entangled in a vertical direction. Furthermore, with the disclosed method, a large number of orifices have to be arranged vertically and/or circumferentially at the peripheral wall of the rotating body in order to improve the productivity per rotating body. This means that large devices have to be arranged separately in order to control the fiber length, the fiber quality and the fiber distribution of fiber, and the operation of the devices requires trained and experienced operators, to consequently raise the investment cost and the running cost. Still additionally, when a large number of orifices are arranged at the peripheral wall of the rotating body, the rotating body has to be made large and/or orifices have to be arranged at small intervals in order to raise the productivity. Then, the rotating body can be deformed to a large extent in the course of service.

On the other hand, with the method disclosed in Japanese Patent Laid-Open No. 5-213625, the fibers elongated by the centrifuge do not show a glass viscosity sufficient for regulating the fiber length and the fiber quality until they collide with the jet streams from the blast ring. However, the fibers have been turned into glass fiber to a large extent by the time they collide with the jet streams to make it difficult to cut the fibers unless compressed air is consumed at a high rate. Additionally, while the diameter and the pitch of arrangement of the jet nozzles are improved, compressed air needs to be used to consequently raise the running cost, and the jet nozzles require maintenance operations frequently. Furthermore, the annular compressed air blast ring has a complex structure that requires a high producing cost.

### SUMMARY OF THE INVENTION

In view of the the prior art as described above, it is therefore an object of the present invention to provide a method and an apparatus for continuously producing high quality glass fiber that shows excellent characteristics required to various glass fiber products in terms of fiber length, fiber quality and fiber distribution and, at the same time, that allows to increase number of orifices in the axial and/or circumferential direction, and that allows to prolong the service life of the rotating body, that improve the productivity, and that suppress any increase in the producing cost.

In an aspect of the present invention, the above object is achieved by providing a method of producing glass fiber by ejecting molten glass through orifices bored through a peripheral wall of a hollow cylindrical rotating body by means of a centrifugal process, said the rotating body being heated and rotated at high speed, said method comprising:
ejecting the molten glass through the orifices bored through the peripheral wall with axial and/or circumferential rows of orificeless sections, to form a primary stream;
introducing the primary stream in a flame flow in an outer peripheral area of the peripheral wall to fine the primary stream to form a secondary stream, said flame flow being ejected downwardly in a direction substantially parallel to the axial direction;
colliding the second stream with a gas flow ejected from gasejection outlets annularly arranged continuously or at intervals in a circumferential direction of the flame flow and opened in a direction substantially parallel to the flame flow; and ejecting a compressed gas in a direction forming an acute angle with the flame flow, to collide the compressed gas with the secondary stream.

Preferably, the gas ejecting outlets are arranged 2-8mm above the uppermost orifices and at positions separated from an outer peripheral surface of the peripheral wall by 15-30mm.

In another aspect of the invention, there is provided an apparatus for producing glass fiber comprising a molten glass supply unit and a hollow cylindrical rotating body having glass ejecting orifices bored through a peripheral wall thereof and being rotatable at high speed; charactrized in that
the orifices for forming primary streams are bored through the peripheral wall of said hollow cylindrical rotating body in an axial direction and/or in a circumferential direction with orificeless sections;
an elongated annular burner for ejecting a flame flow is arranged coaxially with said rotating body in an outer peripheral area of an upper edge of the peripheral wall, and has a plurality of flame ejecting outlets directed downwardly and substantially in parallel with the axial direction;
a gas ejection ring is arranged around an outer periphery of the burner, and has gas ejecting ports for ejecting a gas flow to form a secondary stream, said gas ejecting ports being annularly arranged continuously or at intervals, and opened downwardly in the axial direction, said gas ejecting ports being coaxial with the peripheral wall;
a compressed gas ejecting nozzle is arranged around the outer periphery of the burner, and has a compressed gas ejecting outlet opened in a direction forming an acute angle with the flame flow.

Preferably, the compressed gas ejecting outlets are arranged at positions where they do not collide with the gas flow ejected from the gas ejecting ports, and adapted to eject compressed gas in the direction forming the acute angle with the flame flow.

Preferably, one or more circumferential rows of orificeless sections and/or two or more axial orificeless sections are arranged at a position to be bored with orifices, to divide the orifices into groups.

### BRIEF DESCRIPTION OF THE DRAWINGS

FIG. 1 is a schematic cross sectional elevation view taken along the axis of rotation of an embodiment of the invention.
FIG. 2 is an enlarged partial lateral view of the peripheral wall, showing arrangement of orifices and orificeless sections.
FIG. 3 is an enlarged partial lateral view of the peripheral wall, showing an alternative arrangement of orifices and orificeless sections.
FIG. 4 is an enlarged partial lateral view of the peripheral wall, showing another alternative arrangement of orifices and orificeless sections.
FIG. 5 is an enlarged partial lateral view of the peripheral wall, showing still another alternative arrangement of orifices and orificeless sections.
FIG. 6 is an enlarged schematic partial cross sectional view, showing the arrangement of flame ejecting outlets, gas ejecting outlets and compressed gas ejecting outlets.
FIG. 7 is a graph illustrating the relationship between the glass temperature and the glass viscosity.
FIG. 8 is a graph illustrating the relationship between the fiber quality and the fiber length.
FIG. 9 is a schematic illustration of the arrangement of orifices and orificeless sections according to the invention.
FIG. 10 is a schematic illustration of the arrangement of orifices of the prior art.

### DESCRIPTION OF THE PREFERRED EMBODIMENTS

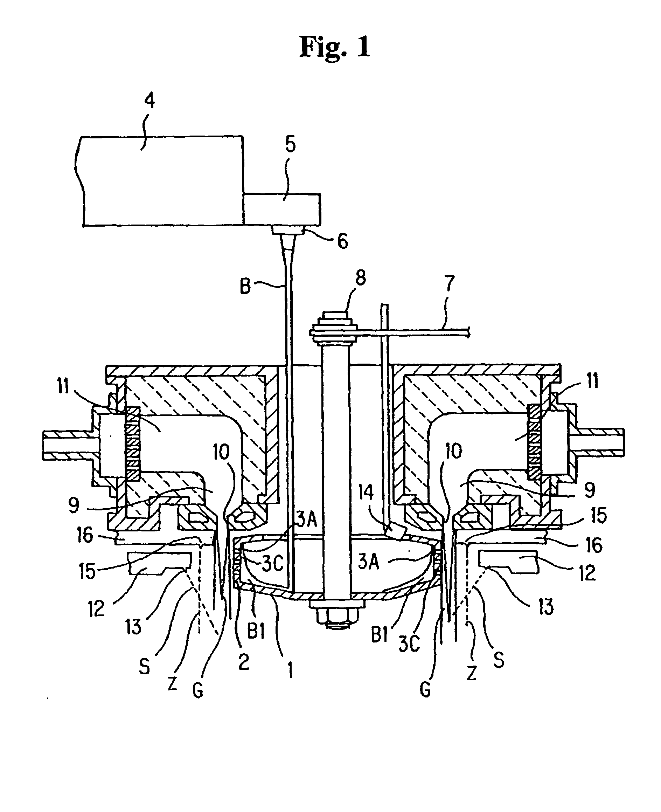

FIG. 1 is a schematic cross sectional elevation view taken along the axis of rotation an embodiment of apparatus for producing glass fiber, using a method for producing glass fiber by means of a centrifugal process according to the invention. Referring to FIG. 1, a hollow cylindrical rotating body 1 is heated and driven to rotate at high speed to eject molten glass B1 contained in the rotating body 1 through orifices 3A of a peripheral wall 2 of the rotary body 1 by centrifugal force in order to produce glass fiber.

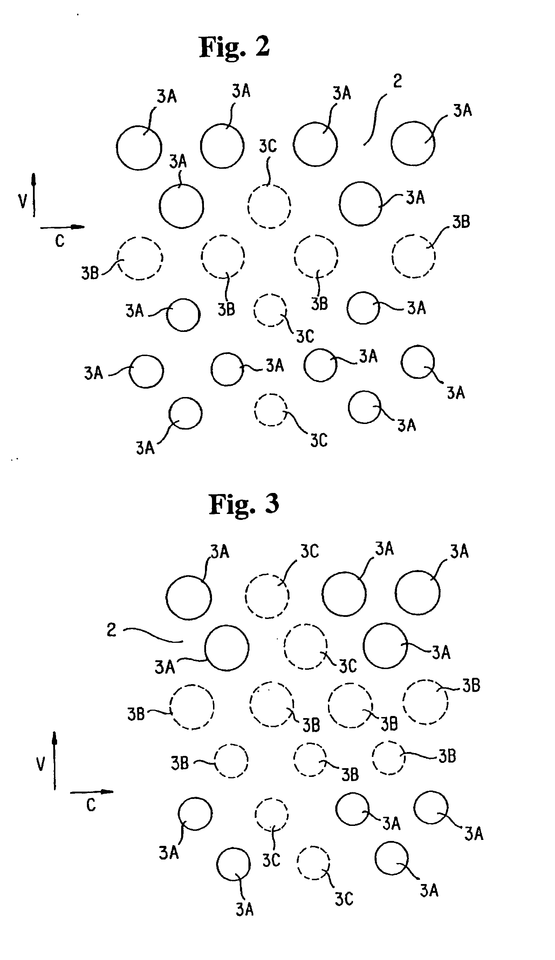

As shown in FIGS. 1 through 5, the peripheral wall 2 of the hollow cylindrical rotating body 1 is provided with a plurality of orifices 3A, 3A, ... which are bored through it, and which are arranged to form a number of rows running in an axial direction (indicated by arrow V) and running in a circumferential direction (indicated by arrow C). Note that the peripheral wall is also provided with rows of orificeless sections 3C, 3C, ... (where no orifice is provided) running in the axial direction (FIG. 2) or those of orificeless sections 3B, 3B, ... (where no orifice is provided) running in the circumferential direction (FIG. 3). Alternatively, both axial rows of orificeless sections 3C running in the axial direction and circumferential rows of orificeless sections 3B may be provided.

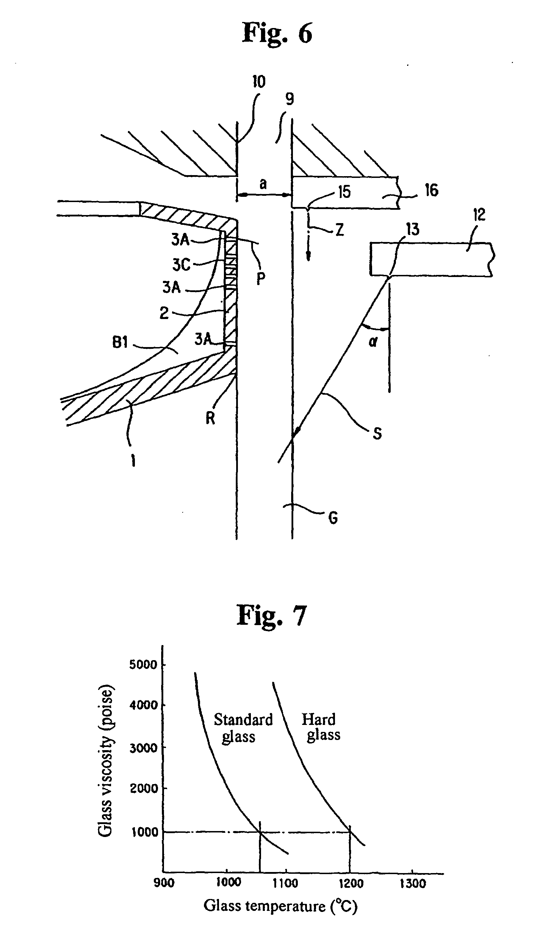

Molten glass B1 is ejected through said orifices 3A, 3A, ... as shown in FIG. 6 to form primary fibers P. A flame flow G bursts or spurts downwardly in a direction substantially parallel to the axial direction V in an outer peripheral area of the peripheral wall of said hollow cylindrical rotating body 1. The primary streams P are introduced into the flame flow G to be fined to form secondary streams. Around the flame flow G, gas ejection ports 15 are annularly arranged continuously or at intervals. A gas flow Z is ejected in a direction substantially parallel to the flame flow G including the secondary streams, to control or regulate a length of the secondary fiber and a fiber quality and/or fiber distribution.

Additionally, a compressed gas S is ejected in a direction forming an acute angle (angle α) with the flame flow G including said secondary streams (downward in FIG. 6), to collide with the secondary fibers.

Preferably, the gas ejecting outlets 15 are arranged at positions separated from an outer peripheral surface of the peripheral wall 2 of the hollow cylindrical rotating body 1 by 15-30mm. Preferably, at the same time, the gas ejecting outlets 15 are arranged at positions located 2-8mm above the upper most row of orifices 3A (as viewed in the axial direction).

FIGS. 1 and 6 schematically illustrate the first embodiment of producing apparatus according to the invention. Now, the present invention will be described in greater detail by referring to them.

Referring to FIG. 1, a glass smelter 4 and a preliminary furnace 5 are arranged above the rotating body 1. The preliminary furnace 5 is arranged downstream relative to the glass smelter 4. A molten glass ejecting nozzle 6 is arranged under the preliminary furnace 5. Molten glass B is made to flow and supplied from the molten glass ejection nozzle 6 into the rotary body 1.

FIGS. 2 through 5 are enlarged partial lateral views of the peripheral wall 2 of the rotating body 1, showing different arrangements of groups of orifices 3A bored through the peripheral wall 2. While a large number of orifices 3A, 3A, ... are bored through the peripheral wall 2 in the axial direction (indicated by arrow V) and also in the circumferential direction (indicated by arrow C), orificeless sections (indicated by broken lines) are also provided.

Note that rows of orificeless sections 3B, 3B, ... running in the circumferential direction may be provided. Alternatively, rows of orificeless sections 3C, 3C, ... running in the axial direction may be provided. Still alternatively, both circumferential rows of orificeless sections 3B and the axial rows of orificeless sections 3C may be provided.

While only a single circumferential row of orificeless sections 3B and a single axial or vertical row of orificeless sections 3C are shown in FIG. 2, the present invention is by no means limited to such an arrangement.

A plurality of rows of orificeless sections may be arranged in the circumferential direction, and/or a plurality of orificeless sections may be arranged in the axial direction.

As shown in FIG. 1, a belt 7 that is driven by a drive unit (not shown) is linked to a rotary shaft 8 of the rotating body 1, so that the rotary body 1 can rotate at high speed. As shown in FIGS. 1 and 6, an annular drawing burner 9 is arranged along an outer periphery of an upper edge of the rotating body 1, so as to be coaxial with the rotating body 1. A flame ejecting outlet 10 is opened downwardly and in the axial direction V which is parallel to a generatrix line of the peripheral wall 2. The flame flow G in a combustion room 11 is ejected downwardly along the generatrix line of the peripheral wall 2.

A gas ejection ring 16 is arranged under the combustion room 11 along an outer periphery of the flame ejecting outlet 10 of the drawing burner 9. The gas ejection ring 16 is coaxial with the upper edge of the outer periphery of the peripheral wall of the rotating body 1. The gas ejection ring 16 has gas an ejecting outlet 15 annularly arranged continuously or at intervals, and opened downwardly substantially in parallel with the direction of the generatrix line of the outer peripheral surface of the peripheral wall 2.

A plurality of compressed gas ejection nozzles 12 are arranged below the gas ejection ring 16. Each of the compressed gas ejection nozzles 12 has a compressed gas ejecting outlet 13 opened downwardly and inclined relative to the axis of rotation of the rotating body 1 to form acute angle α with the latter. In FIG. 1, reference symbol 14 denotes a heating burner for heating an inside of the rotating body 1.

The rotating body 1 is driven to rotate at high speed by way of the belt 7, and heated in the inside thereof by the heating burner 14. Molten glass B contained in the preliminary furnace 5 of the glass smelter 4, which is located above the rotating body 1, is supplied to the inside of the hollow cylindrical rotating body 1 as it is allowed to drop. More specifically, molten glass B is ejected from molten glass ejection nozzles 6 as inverted conical drops, which subsequently are supplied to the inside of the rotating body 1 as they fall.

The molten glass B supplied to the inside of the rotating body 1 is subjected to rotary force by the rotating body 1 rotating at high speed, and forced to be moved upwardly along an inner peripheral surface of the peripheral wall 2 by centrifugal force. (B1 in FIG. 1). Then, the molten glass B1 is ejected to the outside of the peripheral 2 through the plurality of orifices 3A, 3A, .... bored through the peripheral wall 2, to form primary streams P.

Since one or more circumferential rows of orificeless sections 3B and/or one or more axial rows of orificeless sections 3C are provided, the orifices 3A are divided into groups.

When a single row of orificeless sections 3B is provided, the orifices 3A, 3A, ... are divided into two groups of an upper group and a lower group as viewed in the axial direction. When two rows of orificeless sections 3C are provided, the orifices 3A, 3A, ... are divided into two groups that are arranged in the circumferential direction.

One or more circumferential rows of orificeless sections 3B and/or one or more axial rows of orificeless sections 3C may be arranged appropriately. Arrangements other than those described above may be conceivable as will be discussed hereinafter. For the arrangement of orificeless sections, a dynamic balance of the rotating body 1 rotated at high speed and a strength of the peripheral wall 2 have to be taken into consideration.

Two circumferential rows of orificeless sections 3B may be arranged adjacent each other. In this case, wide zones of orificeless sections are produced in the circumferential direction.

From the viewpoint of the distribution of primary streams P and the strength of the peripheral, it is preferable to arrange one or two circumferential rows of orificeless sections and ten axial rows of orificeless sections 3C at regular intervals among the groups of the orifices 3A of the peripheral wall 2.

A gap separating two adjacent orifices 3A, 3A may be same as that of the prior art both in the circumferential direction and in the axial direction of the peripheral wall. Alternatively, the number of orifices per unit surface area of the peripheral wall 2 may be increased to compensate the reduced total number of orifices due to the provision of orificeless sections. According to the invention, the strength of the peripheral wall is increased, because rows of orificeless sections are provided. Additionally, the diametrical expansion of the rotating body 1 due to thermal fatigue is suppressed, because rows of orificeless sections are provided. Therefore, according to the invention, it is possible to raise the height of the peripheral wall 2 of the rotating body 1, and to increase the diameter of the rotating body 1 in order to effectively increase the amount of product and reduce the running cost.

FIG. 3 is an enlarged partial lateral view of the peripheral wall of the embodiment, showing an alternative arrangement of orifices 3A. Referring to FIG. 3, the third and fourth rows of the circumferential rows of orifices 3A are replaced by rows of orificeless sections 3B, and two axial rows of orificeless sections 3C are provided.

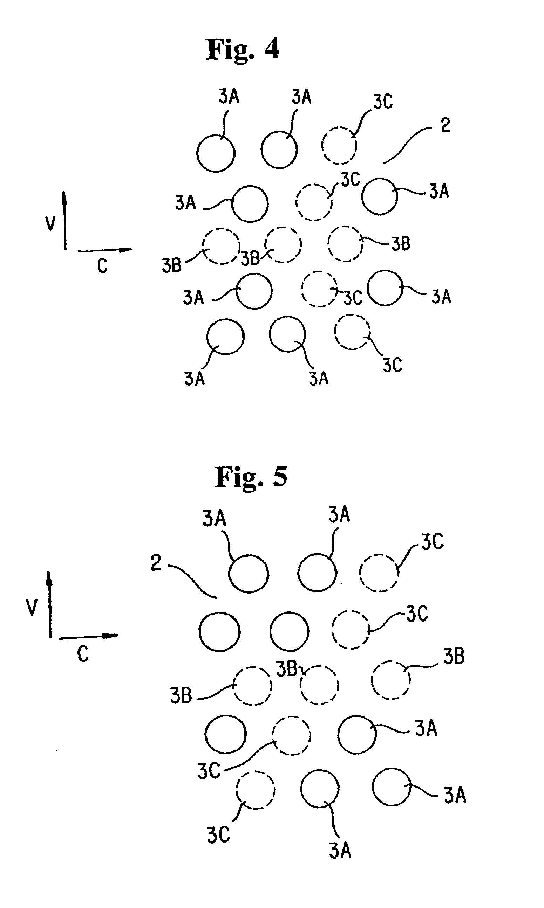

FIG. 4 is an enlarged partial lateral view of the peripheral wall of the embodiment, showing another alternative arrangement of orifices and orificeless sections, where rows of orificeless sections 3C form a V-shape. FIG. 5 is an enlarged partial lateral view of the peripheral wall of the embodiment, showing still another alternative arrangement of orifices and orificeless sections, where a row of orificeless sections 3C is arranged inclined relative to the axial direction.

Possible arrangements of orificeless sections 3B and/or 3C are not limited to those of FIGS. 2-5, and many other arrangements may be conceivable, although it is essential to arrange orificeless sections 3B in the circumferential direction and/or orificeless sections 3C in the axial direction.

As shown in FIGS. 1 and 6, the flame flow G is ejected from the flame ejecting outlets 10 along the outer periphery of the peripheral wall 2 of the rotating body 1 and downwardly in the direction substantially parallel to the generatrix line of the outer peripheral surface of the peripheral wall 2. As described above, the primary fibers P are introduced into the flame flow G, and fined to form the secondary streams. FIG. 6 schematically shows the primary stream P introduced into the flame flow G. Since the primary stream P is introduced into the flame flow G having a width a, the primary stream P is subjected to the effective thermal conduction and drawing effect of the flame flow G, so as to be fined.

The fined secondary streams is collided with the gas flow Z ejected from the gas ejecting outlets 15 of the gas ejection nozzles 16, to control or regulate the secondary streams in terms of fiber length and quality. Additionally, the secondary stream is collided with a compressed gas flow S ejected from the compressed air ejecting outlets 13 of the compressed gas nozzles 12, to cut the secondary streams to a desired length.

The gas flow Z from the gas ejection nozzles 16 is ejected under pressure of about 3,000 mmH₂O or less, although the present invention is not limited thereto. For example, a gas flow of highly pressurized gas or steam may alternatively be used, whenever appropriate.

The ejected rate of the gas flow Z is not higher than 220m/s, preferably at 180m/s, although the present invention is by no means limited thereto. When the gas is ejected at such a rate, even if the gas flow Z collides with the primary streams P, no problem arises to the operation of producing secondary streams in terms of excessively drawing the fibers and prematurely cooling them and turning them into glass fiber. However, when gas is ejected at a rate higher than 220m/s, the primary streams can be prematurely turned to glass fiber as they are drawn and cooled excessively, so as to rise a problem of difficulty of cutting glass fiber and other problems.

As for the angle of the ejected gas flow Z, the direction of the gas flow Z is preferably substantially in parallel with the direction of the flame flow G, but no problem arises when the angle formed by the two flows is within ± 15°.

Thus, it is possible to control or regulate the secondary fibers in terms of fiber length and quality by colliding the gas flow Z with the secondary streams, and then to cut the secondary fibers by colliding the compressed gas flow S with the secondary streams. In this case, the compressed gas is ejected from the compressed gas ejecting outlets 13 at a high rate under pressure of 3kg/cm² for the compressed gas flow S. As for the angle α (acute angle) of the ejected compressed gas flow S, it is preferably between 15 and 30° relative to the direction of the flame flow G.

The quality and length of the secondary streams can be controlled freely by appropriately selecting the flow rate, the applied pressure and the ejection angle of the gas flow Z and those of the compressed gas flow S. It is also possible to control the direction in which secondary fibers fall by appropriately selecting the flow rate, the applied pressure and the ejection angle of the gas flow Z and those of the compressed gas flow S. Secondary streams are collected on the fiber collecting conveyor (not shown) of the glass fiber producing apparatus. The distribution of the collected glass fiber can be controlled by controlling the direction of falling secondary fibers.

However, in case of collision of the secondary streams with the flame flow G and the compressed gas flow S, the following points have to be taken into consideration. As shown in FIG. 6, the primary streams P ejected through the orifices 3A of the peripheral wall 2 have to be fined by the flame flow G, and neither the gas flow Z nor the compressed gas flow S should influence the process of fining. It is necessary to collide the secondary streams with the gas flow Z, provided that the quality and the length of the fiber can be controlled by a glass viscosity of the secondary streams. The temperature of the peripheral wall 2 should not be lowered by the gas flow Z and the compressed gas flow S. The temperature of the flame flow G should not be lowered by the gas flow Z and the compressed gas flow S. The temperature of the lowermost edge R of the peripheral wall 2 should not be lowered by the compressed gas flow S.

Preferably, the gas ejecting outlets 15 are arranged at positions where the gas flow Z does not touch the compressed gas flow S. Each of the gas ejecting outlets 15 has a diameter preferably between 0.5 and 4.0mm, more preferably between 1.5 and 2.6mm. It is preferable to provide 50-250 of the gas ejecting outlets 15, more preferably 100-200. The gas ejecting outlets 15 are arranged at positions separated from the uppermost row preferably by 2 to 8mm, more preferably by 5mm, toward the upstream of the flame flow G. Also, the gas ejecting outlets 15 are arranged at positions separated from the outer peripheral surface of the peripheral wall 2 preferably by 15 to 30mm, more preferably by 20mm. With such arrangement, it is possible to control the secondary streams with ease in terms of fiber length, fiber quality and fiber distribution of fiber. Said gas flow Z is controlled in such a way that the primary stream P passed through the flame flow G are fined to form secondary streams by the flame flow G, and that the viscosity of the glass immediately after fiberization is held to such an extent that the fiber diameter of the fiber can be fined. The fiber quality can be controlled freely to obtain soft fiber by cooling the secondary fibers and bringing them into a predetermined state by means of the compressed gas flow S ejected from the compressed gas ejection nozzles 12. Since the secondary fibers are cooled and brought into a predetermined state by means of the compressed gas flow S in a manner as described above, the secondary streams have such a glass viscosity that they can be further cut by the compressed gas flow S. Since the gas ejection nozzles 15 are opened substantially in parallel with the direction of the flame flow G, the secondary streams can be accumulated near the rotating shaft 8 of the rotating body 1, or accumulated in the transversal direction of the fiber collecting conveyor.

When the diameter of the rotating body 1 is 400mm, it is preferable to provide 20-30 of the compressed gas ejection nozzles 12. If less than 20 of the compressed gas ejection nozzles 12 are provided, the fiber length tends to be increased. If more than 30 of the compressed gas ejection nozzles 12 are provided, no remarkable effect of decreasing the fiber length can be observed, and the consumption rate or amount of compressed gas is increased to disadvantageously push up the producing cost. Each of the compressed gas ejecting outlets 13 are made to show a slot-like profile with a short side of 0.4 to 1.0mm and a long side of 7 to 15mm. Preferably, the slot is dimensioned to 0.5mm × 10mm. The slots are arranged at positions radially separated from the peripheral wall 2 by 35 to 60mm, preferably by 50mm, and located below the upper most row of orifices 3A with a distance of 5 to 30mm, preferably 20mm separating them from the upper most row of orifices 3A.

Table 1 shows the low density product made of standard glass and hard glass obtained by the present invention and the prior art.

**Table 1**

| Low density product | Standard glass | | Hard glass | |
|---|---|---|---|---|
| | Present invention | Prior art | Present invention | Prior art |
| Spinning amount (kg/hr) | 400 | 400 | 400 | 400 |
| Height of peripheral wall (mm) | 60 | 58 | 60 | 58 |
| Average amount of fuel gas (m /hr) | 14 | 17 | 14 | 17 |
| average fiber diameter (µm) | 6.5 | 7.0 | 7.0 | 7.5 |
| Restoring rate against compression (%) | 125 | 110 | 115 | 105 |
| Energy index average amount of fuel gas / Spinning amount (m³/ton) | 35 | 42.5 | 35 | 42.5 |
| Ejection amount of gas ejection nozzle (m /hr) | 120 | 0 | 125 | 0 |
| Ejection pressure of compressed gas ejection nozzle (kg/cm²) | 2.0 | 0 | 2.5 | 0 |
| Fiber length | rather short | long | rather short | long |
| Orifice arrangement | Upper row 4 rows × Φ 0.9mm 3 rows × Φ 0.8mm | Upper row 7 rows × Φ 0.9mm | Upper row 4 rows × Φ 1.0mm 3 rows × Φ 0.95mm | Upper row 7 rows × Φ 0.9mm |
| | | | | |
| | Circumferential direction 1 row of orificeless sections | | Circumferential direction 1 row of orificeless sections Additional 1 row of orificeless sections | |
| | | | | |
| | Remaining lower 38 rows Φ 0.75mm | Remaining lower 31 rows Φ 0.8mm | remaining lower 38 rows Φ 0.9mm | Remaining lower 3.1 rows Φ 0.9mm |
| | | | | |
| | 10 axial orificeless sections in circumferential direction × 1 row each | | 10 axial orificeless sections in circumferential direction × 1 row each | |
| Service life of rotating body | extended by 15% | - | extended by 10% | - |

It is clear from Table 1 that, when a same quantity of product is produced, the product according to the present invention shows a restored rate against compression that is by far greater than that according to the prior art. According to the invention, the service life of the rotating body is extended by 15% for standard glass and 10% for hard glass from that of the prior art. This is because fiber can be controlled or regulated more accurately according to the invention than according to the prior art, to improve the fiber quality and to produce a precise fiber length, so that both the fiber distribution and a binder adhesion ratio in the product are improved. The service life of the rotating body was obtained as follows. Elapsed time or period since the start of the use of the rotating body was observed. Also, time or period that an average fiber diameter according to the present invention was increased to that of the prior art at the elapsed time or period was also observed. These time or periods were compared to obtain the service life of the rotating body. The average amount of fuel gas is an arithmetic average of the amount of the consumed fuel gas per the elapsed time of operation of the rotating body. The average fiber diameter is the arithmetic average of the fiber diameters per the elapsed time of operation of the rotating body.

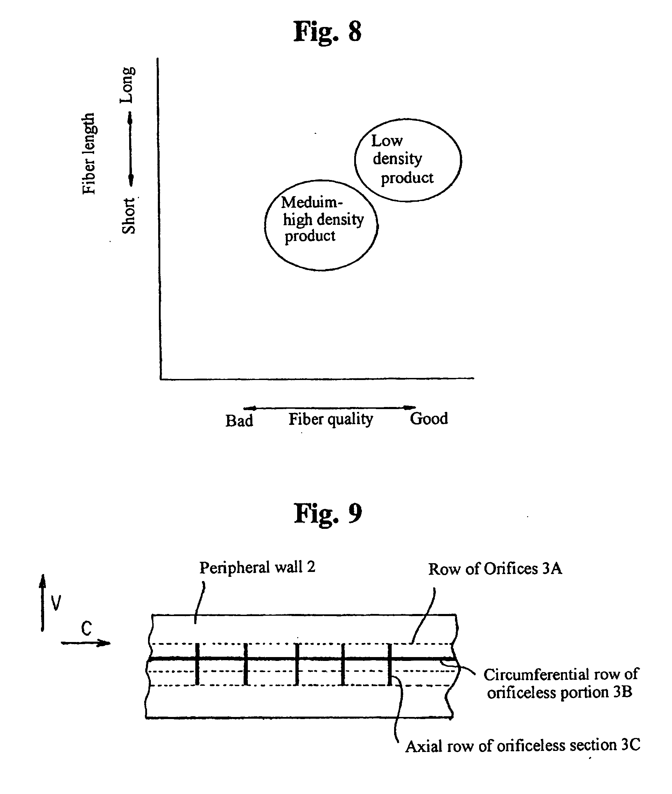

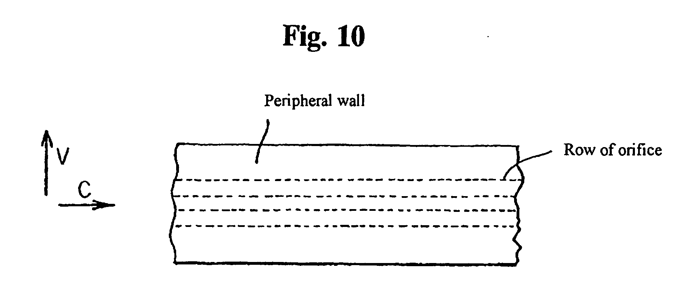

FIGS. 9 and 10 illustrate the arrangement of orifices and the arrangement of orificeless sections shown in Table 1 and Table 2.

FIG. 9 schematically illustrates rows of orifices 3A, circumferential rows of orificeless sections 3B and axial rows of orificeless sections 3C according to the invention. FIG. 10 schematically illustrates rows of orifices of the prior art.

One or more rows of orificeless sections are replaced between the third and tenth rows of orifices 3A as viewed in the axial direction from the uppermost row, in order to reinforce the rotating body and to suppress expansion of the rotating body 1 that can appear with time. As the operating time of the rotary body 1 increases, (1) the thermal balance of the rotating body 1 can become lost due to the effect of the heat emitted from the drawing burner 9, and (2) the peripheral wall 2 is deformed due to the thermal fatigue of the material of the rotary body 1, so that (3) the balance of the flow of primary fibers P can become lost in the process of turning primary streams P into secondary fibers by means of the drawing burner 9, to consequently raise the fiber diameter of the secondary streams, increase the fiber length and degrade the fiber quality. Thus, the rotating body needs to be replaced prematurely, in order to prevent such defective products. Therefore, it is preferable to arrange a row of orificeless sections at the eighth row from the uppermost row.

Table 2 shows the medium-high density product made of standard glass and hard glass obtained by the present invention and the prior art. The standard glass as used herein refers to glass showing a viscosity of about 1,000 poises at 1,070° C, and containing or not containing boric acid (B₂O₃). The hard glass refers to glass showing a viscosity of about 1,000 poises at 1,200° C, and containing or not containing boric acid (B₂O₃).

**Table 2**

| Medium-high density product | Standard glass | | Hard glass | |
|---|---|---|---|---|
| | Present invention | Prior art | Present invention | Prior art |
| Spinning amount (kg/hr) | 400 | 400 | 400 | 400 |
| Height of peripheral wall (mm) | 60 | 58 | 60 | 58 |
| Average amount of fuel gas (m /hr) | 14 | 17 | 14 | 17 |
| Average fiber diameter (µm) | 6.5 | 7.0 | 7.0 | 7.5 |
| Compression strength at 50% compression (kg/m²) 32kg/m² product 96kg/m² product | 1100 10100 | 800 8500 | 1050 9500 | 700 7900 |
| Energy index (Average amount of fuel gas / Spinning amount (m³/ton) | 35 | 42.5 | 35 | 42.5 |
| Ejection amount of gas ejection nozzle (m³/hr) | 60 | 0 | 60 | 0 |
| Ejection pressure of compressed gas ejection nozzle (kg/cm2) | 2.5 | 0 | 2.8 | 0 |
| Fiber length | rather short | long | rather short | long |
| Orifice arrangement | Upper row 4 rows × Φ 0.9mm 3 rows × Φ 0.8mm | Upper row 7 rows × Φ 0.9mm | Upper row 4 rows × Φ 1.0mm 3 rows × Φ 0.95mm | Upper row 7 rows × Φ 0.9mm |
| | | | | |
| | Circumferential direction 1 row of orificeless sections | | Circumferential direction 1 row of orificeless sections additional 1 row of orificeless sections | |
| | | | | |
| | Remaining lower 38 rows Φ 0.75mm | Remaining lower rows Φ 0.8mm | Remaining lower 38 rows Φ 0.9mm | Remaining lower 31 rows Φ 0.9mm |
| | | | | |
| | 10 axial orificeless sections in circumferential direction × 1 row each | | 10 axial orificeless sections in circumferential direction × 1 row each | |
| | | | | |
| Service life of rotating body | extended by 15% | | extended by 10% | |

It is clear from Table 2 that, when a same quantity of product is produced, the method according to the present invention shows a reduced fuel gas amount and an improved compression strength. It is clear that the present invention can provide glass fiber that satisfies the quality requirements of medium-high density products.

In the present invention, one or more circumferential rows of orificeless sections are provided, and/or two or more axial rows of orificeless sections are provided, so as to divide the orifices into groups. It is also clear from Tables 1 and 2 that such invention provides excellent advantages.

In the case of low density products, it is necessary that the fiber length is not too long and that the fiber quality shows softness, in order to provide a good restoring rate. FIG. 8 is a graph illustrating the relationship between the fiber quality and the fiber length in the products according to the invention. As seen from FIG. 8, the fiber length is not too long, and the fiber quality shows softness. While medium-high density products are required to show hardness and rigidity, the medium-high density products according to the invention show a short fiber length and an excellent fiber quality with a proper hardness and a proper rigidity. In short, the present invention can easily provide a fiber length and a fiber quality that correspond to the required product characteristics for both low density products and medium-high density products.

According to the method of the present invention, a large number of orifices are divided to groups. By using orifices formed as described above, the primary streams are ejected through such orifices by centrifugal force, and then the primary streams are collided with the flame flow to fine the primary streams to form the secondary streams. Thus, it is possible to form fine secondary streams stably for a long period of time. Additionally, since gas is ejected in a direction substantially parallel to the flame flow to collide the secondary streams with the gas, it is possible to effectively control the fiber length, the fiber quality and hte fiber distribution of fiber. Subsequently, since the compressed gas is ejected in a direction that forms an acute angle with the flame flow, it is possible to cut the fibers to show a desired length. With this arrangement, the requirements for fiber diameter, fiber quality and fiber length are satisfied for both low density products and medium-high density products, and it is possible to easily achieve required various quality characteristics for a long period of time. Additionally, according to the present invention, it is possible to improve the productivity of producing glass fiber. Furthermore, the present invention provides various advantages including cost reduction due to a prolonged service life of the rotating body, reduced changes in the distribution of fiber diameter also attributable to a prolonged service life of the rotating body, and consequent reduction of amount of fuel gas of the drawing burner.

Additionally, it is possible to produce glass fiber showing excellent quality characteristics particularly in terms of diameter, quality and length by limiting the positions of the gas ejecting outlets.

A producing apparatus according to the invention provides advantages including an improved strength of the rotating body, because circumferential and/or axial rows of orificeless sections are provided. Thus, a service life of the rotating body is increased. In addition, the present invention prevents orifices from deforming, so as to stably supply high quality products for a prolonged period of time. Furthermore, it is also possible to form a large rotating body, and to increase the height of the peripheral wall, so as to increase the productivity of glass fibers. In addition, according to the present invention, since gas is ejected in a direction substantially parallel to the flame flow to collide the gas with secondary streams, it is possible to effectively control fiber length, fiber quality and fiber distribution. In addition, since compressed gas is ejected in a direction that forms an acute angle with the flame flow, it is possible to cut the fibers to show a desired length in a continuous process.

According to the invention, a gas ejection ring can be arranged at such a position that gas ejected from the gas ejecting outlets can collide with the primary streams before they are fined to form a glass fiber. Thus, it is possible to freely control both the quality or texture and the fiber length of glass fiber. In short, it is possible to control the product quality for both low density products and medium-high density products, while it is difficult for the prior art to do so.

Furthermore, it is possible to freely control both the texture or quality and the fiber length of glass fiber by forming gas ejecting outlets in such a way that the flow of compressed gas does not contact the gas flow from the gas ejecting outlets, so that the two gas flows may not interfere with each other and/or contact each other.

Finally, since a row of orificeless sections is provided, they operates as reinforcement for suppressing deformation of the rotating body due to the heat of the flame flow and/or the centrifugal force of the rotating body, so as to prolong the service life of the rotating body. In addition, the deformation of orifices is prevented. Thus, a same average fiber diameter can be stably maintained for a prolonged period of time, and hence the amount of fuel consumption of the drawing burner can be reduced, so that it is possible to provide advantages including maintaining the capability of high quality glass fiber, raising the productivity, and cost reduction.

## Claims

1. A method of producing glass fiber by ejecting molten glass (B1) through orifices (3A) bored through a peripheral wall (2) of a hollow cylindrical rotating body (1) by means of a centrifugal process, said the rotating body (1) being heated and rotated at high speed, said method comprising:
ejecting the molten glass (B1) through the orifices (3A) bored through the peripheral wall (2) with axial and/or circumferential rows of orificeless sections (3B, 3C), to form a primary stream (P) ;
introducing the primary stream (P) in a flame flow (G) in an outer peripheral area of the peripheral wall (2) to fine the primary stream (P) to form a secondary stream, said flame flow (G) being ejected downwardly in a direction substantially parallel to the axial direction (V);
colliding the second stream with a gas flow (Z) ejected from gasejection outlets (15) annularly arranged continuously or at intervals in a circumferential direction of the flame flow (G) and opened in a direction substantially parallel to the flame flow (G); and ejecting a compressed gas in a direction forming an acute angle (α) with the flame flow (G), to collide the compressed gas with the secondary stream.

2. The method according to claim 1, wherein
the gas ejecting outlets (15) are arranged 2-8mm above the uppermost orifices (3A) and at positions separated from an outer peripheral surface of the peripheral wall (2) by 15-30mm.

3. An apparatus for producing glass fiber comprising a molten glass supply unit and a hollow cylindrical rotating body (1) having glass ejecting orifices (3A) bored through a peripheral wall (2) thereof and being rotatable at high speed; charactrized in that
the orifices (3A) for forming primary streams (P) are bored through the peripheral wall (2) of said hollow cylindrical rotating body (1) in an axial direction (V) and/or in a circumferential direction (C) with orificeless sections (3B, 3C);
an elongated annular burner (9) for ejecting a flame flow (G) is arranged coaxially with said rotating body (1) in an outer peripheral area of an upper edge of the peripheral wall (2), and has a plurality of flame ejecting outlets (15) directed downwardly and substantially in parallel with the axial direction (V);
a gas ejection ring (16) is arranged around an outer periphery of the burner (9), and has gas ejecting ports (15) for ejecting a gas flow (Z) to form a secondary stream, said gas ejecting ports (15) being annularly arranged continuously or at intervals, and opened downwardly in the axial direction (V), said gas ejecting ports (15) being coaxial with the peripheral wall (2);
a compressed gas ejecting nozzle (12) is arranged around the outer periphery of the burner (9), and has a compressed gas ejecting outlet (13) opened in a direction forming an acute angle (α) with the flame flow (G).

4. The apparatus according to claim 3, wherein
the compressed gas ejecting outlets (13) are arranged at positions where they do not collide with the gas flow (S) ejected from the gas ejecting ports (15), and adapted to eject compressed gas (S) in the direction forming the acute angle (α) with the flame flow (G).

5. The apparatus according to claim 3 or 4, wherein
one or more circumferential rows of orificeless sections (3B) and/or two or more axial orificeless sections (3C) are arranged at a position to be bored with orifices, to divide the orifices into groups.
